(19) **Europäisches Patentamt / European Patent Office / Office européen des brevets**

(11) **EP 4 404 626 A1**

(12) # EUROPEAN PATENT APPLICATION

(43) Date of publication:
**24.07.2024 Bulletin 2024/30**

(21) Application number: **23152038.8**

(22) Date of filing: **17.01.2023**

(51) International Patent Classification (IPC):
**H04W 36/00** $^{(2009.01)}$   **H04W 84/04** $^{(2009.01)}$

(52) Cooperative Patent Classification (CPC):
**H04W 36/0016; H04W 84/047**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
- TAYYAB, Muhammad
  **90630 Oulu (FI)**
- JOSHI, Satya Krishna
  **90420 Oulu (FI)**

(74) Representative: **Whiting, Gary et al**
**Venner Shipley LLP**
**5 Stirling House**
**Stirling Road**
**The Surrey Research Park**
**Guildford GU2 7RF (GB)**

(54) **HANDOVER**

(57)     An apparatus, method and computer program is described comprising: receiving a handover request from a second node of the mobile communication network, wherein the second node is serving a user device thereby enabling the user device to communicate using the mobile communication network and wherein said handover request requests that the first node serves said user device; determining whether the first node has a speed above a first threshold level; generating a handover request response; and providing the handover request response to the second node in response to the handover request.

Fig. 4

## Description

### Field

The present specification relates to handovers in mobile communication systems.

### Background

In order to implement a handover for a user device of a mobile communication system from being served by a current source node to being served by an identified target node, a handover request process may be implemented. The remains a need for developments in this field.

### Summary

In a first aspect, this specification describes a first node (e.g. a target node) of a mobile communication network, the first node comprising: means for receiving a handover request from a second node (e.g. a source or serving node) of the mobile communication network, wherein the second node is serving a user device thereby enabling the user device to communicate using the mobile communication network and wherein said handover request requests that the first node serves said user device; means for determining whether the first node has a speed (e.g. an actual, average or relative speed) above a first threshold level; means for generating a handover request response; and means for providing the handover request response to the second node in response to the handover request, wherein: the handover request response rejects said request in the event that the speed of the first node is above the threshold level; and the handover request response conditionally accepts said request and includes estimated position data for the first node at one or more future time points in the event that the speed of the first node is below the threshold level.

The first node may further comprise means for determining the speed (e.g. the actual, average of relative speed) of said first node.

The first node may further comprise means for generating said estimated position data.

The first node may further comprise means for determining whether said first node is temporarily stationary and, if so, setting said handover request response to reject or postpone said handover request.

The first node may further comprise means for receiving data from the second node of the mobile communication network, said data including data relating to communications between a user device and the first node. The received data may, for example, include a flag indicating whether said first node is a mobile node or a stationary node.

The received data may further comprise a scaled signal strength indication for communications from the first node to the user device. The scaled signal strength indication may be dependent on a signal strength measurement (e.g. RSRP) that is adjusted by a factor dependent on a relative speed of the user device and the first node.

In a second aspect, this specification describes a second node (e.g. a source or serving node) of a mobile communication network, the node comprising: means for receiving data from a user device that is being served by the second node thereby enabling the user device to communicate using the mobile communication network, wherein said data includes data relating to a first node of the mobile communication network; means for sending a handover request to the first node; means for receiving a handover request response from the first node, wherein said handover request response includes estimated position data for the first node at one or more future time points in the event that the handover request response is a conditional acceptance of the handover request; and means for determining whether initiate a handover from the second node to the first node based, at least in part, on a position of the user device and the estimated position data for the first node. The decision regarding whether or not to initiate the handover may be based, at least in part, on whether the estimated (e.g. future) positions are feasible.

The second node may further comprise means for determining whether to send a further handover request to the first node in the event that the handover request response is a postpone instruction.

The received data may include a flag indicating whether said first node is a mobile node or a stationary node.

The received data may further comprise a scaled signal strength indication for communications from the first node to the user device. The scaled signal strength indication is dependent on a signal strength measurement (e.g. RSRP) that is adjusted by a factor dependent on a relative speed of the user device and the first node.

In a third aspect, this specification describes a user device (such as a user equipment, UE) of a mobile communication network comprising: means for determining whether a relative speed between a first node (e.g. a target node) of the mobile communication network and the user device is above a threshold and, if so, removing said first node from consideration as a target node for communications; and means for providing data to a second node (e.g. a source or serving node) of the mobile communication network, wherein the second node is serving the user device thereby enabling the user device to communicate using the mobile communication network, wherein said data includes: data relating to communications between the user device and the mobile communication network; and data relating to said first node in the event that the determined relative speed is below said threshold.

The user device may further comprise means for determining a scaled signal strength indication for communications from the first node to the user device, wherein said data relating to the first node includes said scaled signal strength indication. The scaled signal strength indication may be dependent on a signal strength measurement (e.g. RSRP) that is adjusted by a factor dependent on the relative speed of the user device and the first node.

The user device may further comprise means for determining said relative speed based on one or more of: signal strength measurements; time of arrival (e.g. as part of a PRS signal) or other ranging signals; Doppler shift measurement; and direct sensing. In some example embodiments, an average of multiple factors may be considered, or an average in which outliers are removed.

The data may include a flag indicating whether said first node is a mobile node or a stationary node.

In a fourth aspect, this specification describes a method comprising: receiving, at a first node of a mobile communication network, a handover request from a second node of the mobile communication network, wherein the second node is serving a user device thereby enabling the user device to communicate using the mobile communication network and wherein said handover request requests that the first node serves said user device; determining whether the first node has a speed above a first threshold level; generating a handover request response; and providing the handover request response to the second node in response to the handover request, wherein: the handover request response rejects said request in the event that the speed of the first node is above the threshold level; and the handover request response conditionally accepts said request and includes estimated position data for the first node at one or more future time points in the event that the speed of the first node is below the threshold level.

The first node may determine the speed (e.g. the actual, average of relative speed) of said first node.

The first node may generate said estimated position data.

The first node may determine whether said first node is temporarily stationary and, if so, setting said handover request response to reject or postpone said handover request.

The first node may receive data (such as a flag indicating whether said first node is a mobile node or a stationary node) from the second node of the mobile communication network, said data including data relating to communications between a user device and the first node.

In a fifth aspect, this specification describes a method comprising: receiving data at a second node of a mobile communication network from a user device that is being served by the second node thereby enabling the user device to communicate using the mobile communication network, wherein said data includes data relating to a first node of the mobile communication network; sending a handover request to the first node; receiving a handover request response from the first node, wherein said handover request response includes estimated position data for the first node at one or more future time points in the event that the handover request response is a conditional acceptance of the handover request; and determining whether initiate a handover from the second node to the first node based, at least in part, on a position of the user device and the estimated position data for the first node.

The second node may determine whether to send a further handover request to the first node in the event that the handover request response is a postpone instruction.

The received data may include a flag indicating whether said first node is a mobile node or a stationary node.

The received data may further comprise a scaled signal strength indication for communications from the first node to the user device. The scaled signal strength indication is dependent on a signal strength measurement (e.g. RSRP) that is adjusted by a factor dependent on a relative speed of the user device and the first node.

In a sixth aspect, this specification describes a method comprising: determining whether a relative speed between a first node of a mobile communication network and a user device that is being served by a second node of the mobile communication network, thereby enabling the user device to communicate using the mobile communication network, is above a threshold and, if so, removing said first node from consideration as a target node for communications; and providing data to the second node of the mobile communication network, wherein said data includes: data relating to communications between the user device and the mobile communication network; and data relating to said first node in the event that the determined relative speed is below a threshold.

The user device may determine a scaled signal strength indication for communications from the first node to the user device, wherein said data relating to the first node includes said scaled signal strength indication. The scaled signal strength indication may be dependent on a signal strength measurement (e.g. RSRP) that is adjusted by a factor dependent on the relative speed of the user device and the first node.

The user device may determine said relative speed based on one or more of: signal strength measurements; time of arrival (e.g. as part of a PRS signal) or other ranging signals; Doppler shift measurement; and direct sensing. In some example embodiments, an average of multiple factors may be considered, or an average in which outliers are removed.

The data may include a flag indicating whether said first node is a mobile node or a stationary node.

In a seventh aspect, this specification describes computer-readable instructions which, when executed by a computing apparatus, cause the computing apparatus to perform (at least) any method as described herein (including the methods of the fourth, fifth and sixth aspects described above).

In an eigth aspect, this specification describes a computer-readable medium (such as a non-transitory computer-readable medium) comprising program instructions stored thereon for performing (at least) any method as described herein (including the methods of the fourth, fifth and sixth aspects described above).

In a ninth aspect, this specification describes an apparatus comprising: at least one processor; and at least one memory including computer program code which, when executed by the at least one processor, causes the apparatus to perform (at least) any method as described herein (including the methods of the fourth, fifth and sixth aspects described above).

In a tenth aspect, this specification describes a computer program comprising instructions which, when executed by an apparatus, cause the apparatus to: receive a handover request from a second node of the mobile communication network, wherein the second node is serving a user device thereby enabling the user device to communicate using the mobile communication network and wherein said handover request requests that the first node serves said user device; determine whether the first node has a speed above a first threshold level; generate a handover request response; and provide the handover request response to the second node in response to the handover request, wherein: the handover request response rejects said request in the event that the speed of the first node is above the threshold level; and the handover request response conditionally accepts said request and includes estimated position data for the first node at one or more future time points in the event that the speed of the first node is below the threshold level.

In an eleventh aspect, this specification describes a computer program comprising instructions which, when executed by an apparatus, cause the apparatus to: receive data at a second node of a mobile communication network from a user device that is being served by the second node thereby enabling the user device to communicate using the mobile communication network, wherein said data includes data relating to a first node of the mobile communication network; send a handover request to the first node; receive a handover request response from the first node, wherein said handover request response includes estimated position data for the first node at one or more future time points in the event that the handover request response is a conditional acceptance of the handover request; and determine whether initiate a handover from the second node to the first node based, at least in part, on a position of the user device and the estimated position data for the first node.

In a twelfth aspect, this specification describes a computer program comprising instructions which, when executed by an apparatus, cause the apparatus to: determine whether a relative speed between a first node of a mobile communication network and a user device that is being served by a second node of the mobile communication network, thereby enabling the user device to communicate using the mobile communication network, is above a threshold and, if so, removing said first node from consideration as a target node for communications; and provide data to the second node of the mobile communication network, wherein said data includes: data relating to communications between the user device and the mobile communication network; and data relating to said first node in the event that the determined relative speed is below a threshold.

In a thirteenth aspect, this specification describes: a first node (or some other means) for receiving a handover request from a second node of a mobile communication network, wherein the second node is serving a user device thereby enabling the user device to communicate using the mobile communication network and wherein said handover request requests that the first node serves said user device; a control module (or some other means) for determining whether the first node has a speed above a first threshold level; a handover module (or some other means) for generating a handover request response; and an output (or some other means) for providing the handover request response to the second node in response to the handover request, wherein: the handover request response rejects said request in the event that the speed of the first node is above the threshold level; and the handover request response conditionally accepts said request and includes estimated position data for the first node at one or more future time points in the event that the speed of the first node is below the threshold level.

In a fourteenth aspect, this specification describes: a node (or some other means) for receiving data at a second node of a mobile communication network from a user device that is being served by the second node thereby enabling the user device to communicate using the mobile communication network, wherein said data includes data relating to a first node of the mobile communication network; an output (or some other means) for sending a handover request to the first node; an input (or some other means) for receiving a handover request response from the first node, wherein said handover request response includes estimated position data for the first node at one or more future time points in the event that the handover request response is a conditional acceptance of the handover request; and a control module (or some other means) for determining whether initiate a handover from the second node to the first node based, at least in part, on a position of the user device and the estimated position data for the first node.

In a fifteenth aspect, this specification describes: a control module (or some other means) for determining whether a relative speed between a first node of a mobile communication network and a user device that is being served by a second node of the mobile communication network, thereby enabling the user device to communicate using the mobile communication network, is above a threshold and, if so, removing said first node from consideration as a target node for communications; and an output (or some other means) for providing data to the second node of the mobile communication network, wherein said data includes: data relating to communications between the user device and the mobile communication network; and data relating to said first node in the event that the determined relative speed is below a threshold.

**Brief description of the drawings**

Example embodiments will now be described, by way of example only, with reference to the following schematic drawings, in which:

FIG. 1 is a block diagram of an example communication system;
FIG. 2 is a flow chart showing an algorithm that may be implemented using a communication system;
FIG. 3 is a message flow sequence showing an example implementation of the algorithm of FIG. 2;
FIG. 4 is a block diagram of a system in accordance with an example embodiment;
FIG. 5 is a block diagram of a system in accordance with an example embodiment;
FIG. 6 shows a message flow sequence in accordance with an example embodiment;
FIG. 7 is a flow chart showing an algorithm in accordance with an example embodiment;
FIG. 8 is a flow chart showing an algorithm in accordance with an example embodiment;
FIG. 9 shows a message flow sequence in accordance with an example embodiment;
FIG. 10 is a flow chart showing an algorithm in accordance with an example embodiment;
FIG. 11 is a flow chart showing an algorithm in accordance with an example embodiment;
FIG. 12 is a plot showing a curve that can be used for determining the relative speed of a UE in accordance with an example embodiment;
FIG. 13 is a block diagram demonstrating the determination of the relative speed of a UE with respect to a target node utilizing time-of-arrival or other ranging signals in accordance with an example embodiment;
FIG. 14 is a schematic diagram of components of one or more of the example embodiments described previously; and
FIG. 15 shows tangible media for storing computer-readable code which when run by a computer may perform methods according to example embodiments described herein.

**Detailed description**

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.
In the description and drawings, like reference numerals refer to like elements throughout.

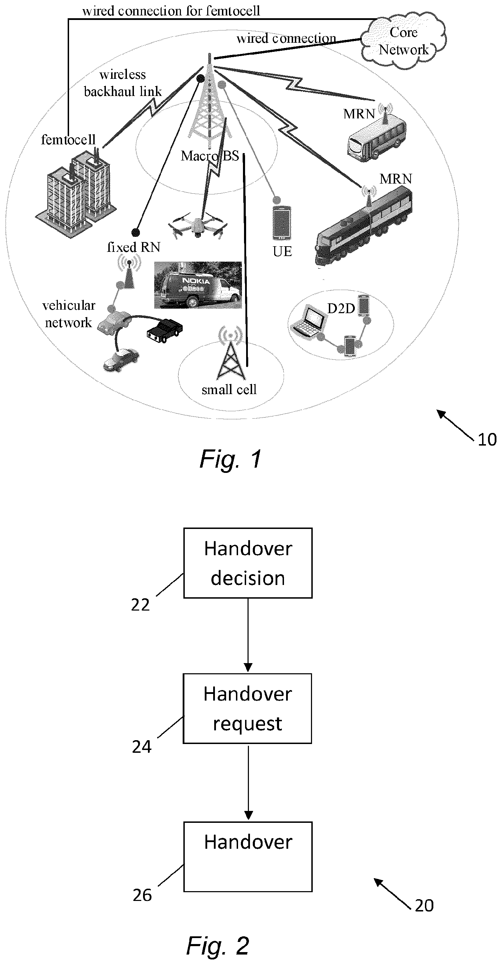

FIG. 1 is a block diagram of an example communication system, indicated generally by the reference numeral 10.
The system 10 shows a dense case scenario that may be implemented, for example, using a 5G or 6G mobile communication system. The communication system 10 comprises a fixed macro base station (BS), fixed small cells, fixed unmanned aerial vehicles (UAVs), mobile small cells (MSC) (e.g.. cells on wheels), mobile relay nodes (MRNs) (e.g. installed at rooftop of bus, train, trams that travels on a specified road/trajectory, etc), mobile UAVs (e.g. for moving group of UEs, such as a bicycle race), etc.
In a highly dynamic scenario, such as the communication system 10, it can be challenging to decide which cell should serve a given UE. For example, it can be difficult to decide whether to use an available fixed cell or an available mobile cell.
FIG. 2 is a flow chart showing an algorithm, indicated generally by the reference numeral 20 that may be implemented using a communication system. The algorithm 20 may, for example, be used in the communication system 10, as well as many other communication systems.
As discussed further below, the algorithm 20 comprises a handover decision stage 22, a handover request stage 24, and a handover stage 26.

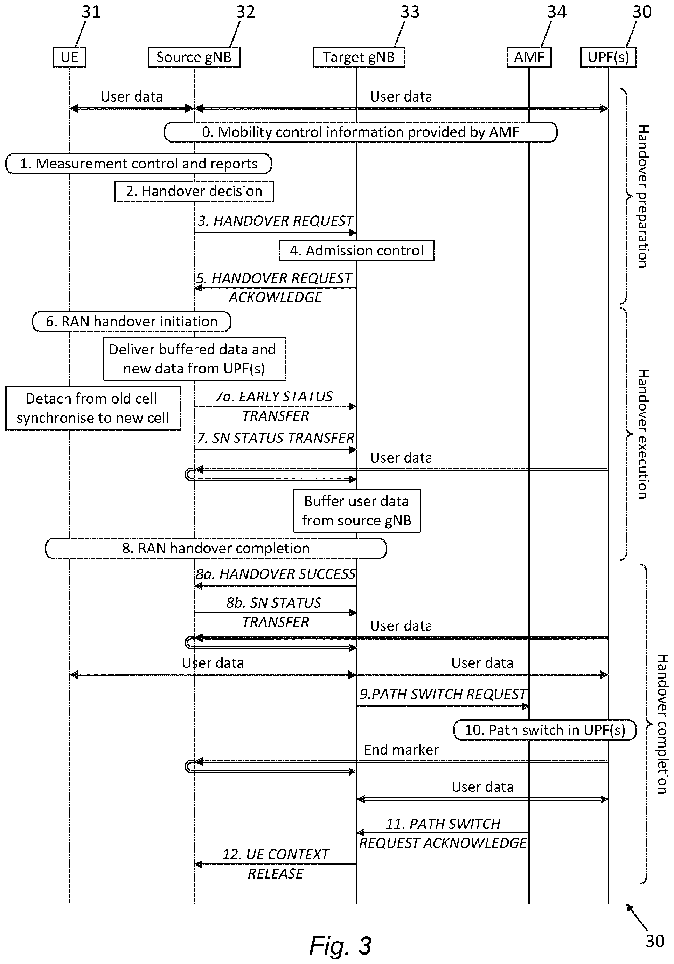

FIG. 3 is a message flow sequence, indicated generally by the reference numeral 30, showing an example implementation of the algorithm 20. The message flow sequence 30 is as defined in the 3GPP standard TS38.300. The sequence 30 shows messages between a user equipment (UE) 31, a source gNB 32, a target gNB 33, an Access and Mobility Management Function (AMF) 34 and one or more User Plane Functions (UPFs) 35.
The message flow sequence 30 comprises a handover preparation stage (incorporating messages and decisions 0 to 5), a handover execution stage (incorporating messages and decisions 6 and 7), and a handover completion stage (incorporating messages and decisions 8 onwards).
In the handover preparation stage of the sequence 30, a Measurement Report is generated by the UE 31 and provided to the source gNB 32.
The source gNB 32 configures the UE measurement procedures and the UE 31 provides measurement reports according to a measurement configuration. For example, the UE may perform downlink (DL) reference signal measurements and, if the measurements suggest that the target node (such as the target gNB 33) is better than the serving BS (e.g. the source gNB 32) plus an offset and this condition is maintained by a time called time to trigger (TTT) (to prevent triggering from occurring too often - so-called "ping pong"), then UE may send the measurement report to the serving node for use in initiating a handover. The generation and transmission of the Measurement Report forms part of an example implementation of the operation 22 of the algorithm 20.

In response to the Measurement Report, the source gNB 32 makes a Handover Decision (completing the operation 22 of the algorithm 20) and, if a handover is to be initiated, sends a Handover Request to the target gNB 33 (thereby implementing the operation 24 of the algorithm 20).

In response to the Handover Request, an Admission Control process is implemented at the target gNB 33 (where the target gNB determines whether or not to accept the handover request). Following admission control, a Handover Request Acknowledge message is sent from the target gNB 33 to the source 32, following which handover occurs (thereby implementing the operation 26 of the algorithm 20).

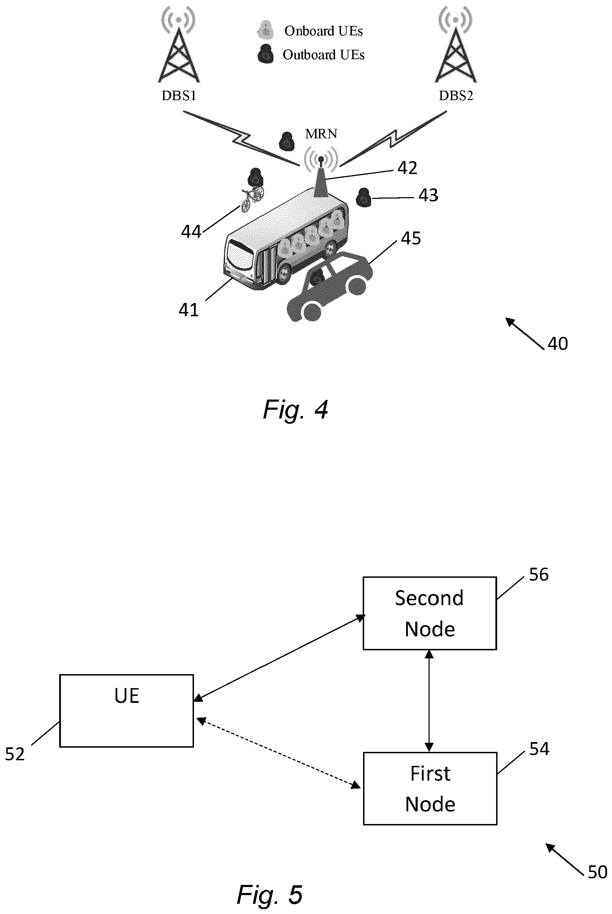

FIG. 4 is a block diagram of a system, indicated generally by the reference numeral 40, in accordance with an example embodiment.

The system 40 a vehicle 41 (a bus in this example), wherein a mobile relay node (MRN) 42 is installed on the bus and the bus is moving along a specified road with a plurality of UEs onboard. The MRN 42 may be intended to serve only onboard UEs but some other nearby UEs named as outboard UEs (e.g. a pedestrian 43, a cyclist 44, a car 45, etc.) may also be able to connect to the MRN (typically for a short time period). These short time period connections, if they occur, are likely to increase the ping-pong rate, and consequently trigger high number of handovers for RRC_Connected UEs. This may increase signalling overheads and the handover (HO) interruption times, thereby degrading the quality of experience for some or all of the UEs in the system 40.

Furthermore, there is a possibility that onboard UEs will connect to other network nodes (e.g. fixed gNBs or base statins), for example in the event that a UE finds that a particular fixed target cell is better (according to some metric) than the serving MRN 42. This might occur, for example, when the bus 41 stops (e.g. a temporary stop at a bus stop or a traffic signal).

The handover procedure of the message sequence 30 was designed with the assumption that gNBs (such as the source gNB 32 and target gNB 33) are in fixed locations and only UEs (such as the UE 31) are mobile. This is not the case in the system 40.

FIG. 5 is a block diagram of a system, indicated generally by the reference numeral 50, in accordance with an example embodiment. The system 50 comprises a user equipment (UE) 52, a first node 54 and a second node 56. In the example shown in FIG. 5, the second node 56 is currently acting as a source (or serving) node and the first node 54 is a target node (as indicated by the dotted arrow in FIG. 5).

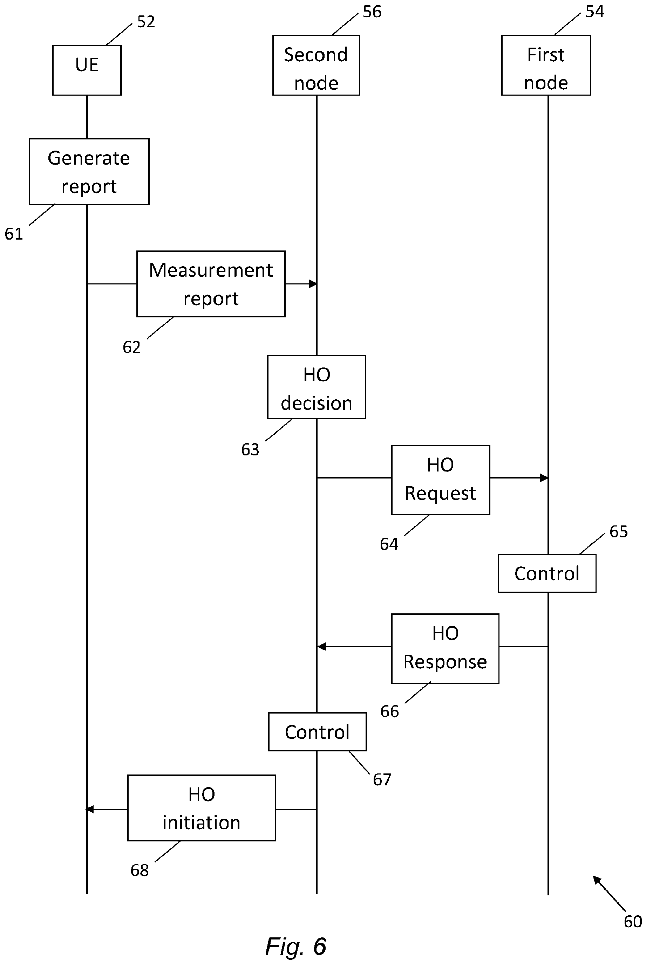

FIG. 6 shows a message flow sequence, indicated generally by the reference numeral 60, in accordance with an example embodiment. The sequence 60 shows information and messages transferred between the UE 52, the first node 54 and the second node 56 of the system 50 described above. The sequence 60 has many similarities with the handover preparation phase of the message flow sequence 30 described above.

The sequence 60 starts at operation 61, where a measurement report is generated at the UE 52. The measurement report includes information relating to the first (target) node 54. As discussed further below, the report may also include a flag (*tgNBmobilityFlag*) indicating whether the first node 54 is mobile (*tgNBmobilityFlag = True*) or stationary (*tgNBmobilityFlag = False*).

The measurement report generated in the operation 61 is sent by the UE 52 to the second node 56 as message 62. Note that, in some example embodiments, if *tgNBmobilityFlag = False* (i.e. the target node 54 is deemed to be stationary), then the algorithm 30 described above may be used.

In response to the measurement report provided in the message 62 (and optionally following a determination that *tgNBmobilityFlag = True*), the second node 56 takes a handover decision 63 and, if a handover is to be initiated, sends a handover request 64 to the first node 54.

In response to the handover request 64, the first node 54 implements a control function 65 (as discussed further below). The first node 54 then sends a handover response 66 to the second node 56. The handover response 66 may include a conditional acceptance of the handover request 64.

In response to the handover response 66, the second node 56 implements a control function 67 (as discussed further below). If a handover is approved, a handover initiation message 68 is sent to the UE 52. The handover process then proceeds, for example implementing the Handover Execution and Handover Completion phases of the algorithm 30 described above.

In the message sequence 60, the decision regarding whether a handover request is accepted is made jointly by the first (target) node 54 (in the control function 65) and the second (source) node 56 (in the control function 67). A number of features may be implemented as part of the control functions 65 and 67. Some example implementations are discussed below (for example, with reference to algorithms 70 and 80). It should be noted that these implementations of the control functions are described by way of example only; the various control function features described herein may be implemented in different combinations.

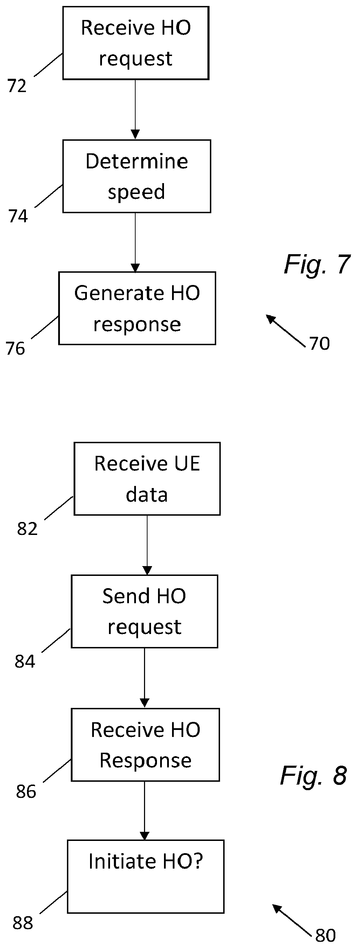

FIG. 7 is a flow chart showing algorithm, indicated generally by the reference numeral 70, in accordance with an example embodiment. The algorithm 70 is an example implementation of the control function 65 performed at the first node 54.

The algorithm 70 starts at operation 72, where a handover request (such as the HO Request 64) is received at the first node 54 from a second node (e.g. the second node 56 of the mobile communication network 50), wherein the second node is serving a user device (e.g. the UE 52) thereby enabling the user device to communicate using the mobile communication network and wherein said handover request requests that the first node serves said user device.

At operation 74, a determination is made regarding whether the first node 54 (which may be a mobile node, as discussed above) has a speed above a first threshold level. The operation 74 may comprise a determination of whether the actual current speed or an average speed of the first node is above a threshold speed (and the first node 54 may include means for determining said speed). Alternatively, the operation 74 may comprise a determination of whether a relative speed of first node (e.g. the speed of the first node 54 relative to the UE 52) is above a threshold.

For example, the first node 54 may know its current average speed (say, $v_{MRN}$). If $v_{VMRN} > v_{threshold}$, the first node may reject the handover request 64. In other words, the determination of whether or not a handover request is accepted may be dependent on the speed at which the mobile target node is moving.

At operation 76, a handover request response is generated. That response is sent to the second node 56 as part of the handover response 66 described above. The handover response generated in the operation 76 may reject the handover request in the event that the first node has a speed above the threshold level and may conditionally accept the in the event that the first node has a speed below the threshold level. In some example embodiments, the handover request response may include a postpone option (in addition to, or instead of, the reject option). In the event that the first node postpones the handover request, an indication may be sent to the second node 56 (as part of the handover response 66) to ask the UE to re-send a handover request after a specified time window.

In one example implementation of the operation 76, if $v_{MRN} < v_{threshold}$, the target node 54 sends a *Handover Request Acknowledgement* as part of the Handover Response 66, wherein the handover response 66 includes additional information, e.g., with possible location(s) of first node (MRN) at one or more later times (e.g. after $\Delta t_1$ and $\Delta t_2$ time periods). By way of example, a location estimate of the first node may be generated based on information such as route information, map information and/or the current average speed of the first node. The first node 54 may include means for generating said estimated position data.

Table 1 shows example position estimate data for a target node 54 (e.g. the MRN 42 of the system 40) at two future time points that may be provided as part of the handover response 66.

Table 1: estimated location of first node 54

| Time | $\Delta t_1$ | $\Delta t_2$ |
|---|---|---|
| Estimated location | $(x_1, y_1)$ | $(x_2, y_2)$ |

FIG. 8 is a flow chart showing algorithm, indicated generally by the reference numeral 80, in accordance with an example embodiment. The algorithm 80 is an example implementation of the HO decision operation 63 and the control function 67 performed at the second node 56 described above.

The algorithm 80 starts at operation 82, where data is received at the second node 56 from a user device (e.g. the UE 52) that is being served by the second node (thereby enabling the user device to communicate using the mobile communication network). The data received in the operation 82 includes data relating to a target node (e.g. the first node 54) of the mobile communication network. That data may include the *tgNBmobilityFlag* discussed above. The data may include signal strength data (e.g. RSRP data for communications between the second node 56 and the UE 52).

At operation 84, a handover request (e.g. the request 64) is sent to the first (target) node 54.

A handover response (e.g. the response 66) is received (from the target node) in operation 86. In the event that handover response is a conditional acceptance of the handover request, then the algorithm 80 moves to operation 88 where a determination is made regarding whether or not to initiate the handover.

As discussed above, the handover request response 66 may include estimated position data for the first node at one or more future time points and the outcome of the operation 88 may be dependent, at least in part, on said position data. For example, the operation 88 may include determining whether future target node position(s) are feasible.

In one example implementation of the operation 88, based on the information provided by the target node 54 as part of the handover response 66, the source node 56 evaluates the feasibility of handover-admission-control based on the current location of the UE 52 (e.g. by determining whether the future location(s) of the mobile node offer good connection options, based on the estimated current location of the UE). Note that the UE location may not need to be accurate; for example UE location based be determined based on one or more of beam-direction and cell boundary info, footprinting, E-CID, etc.

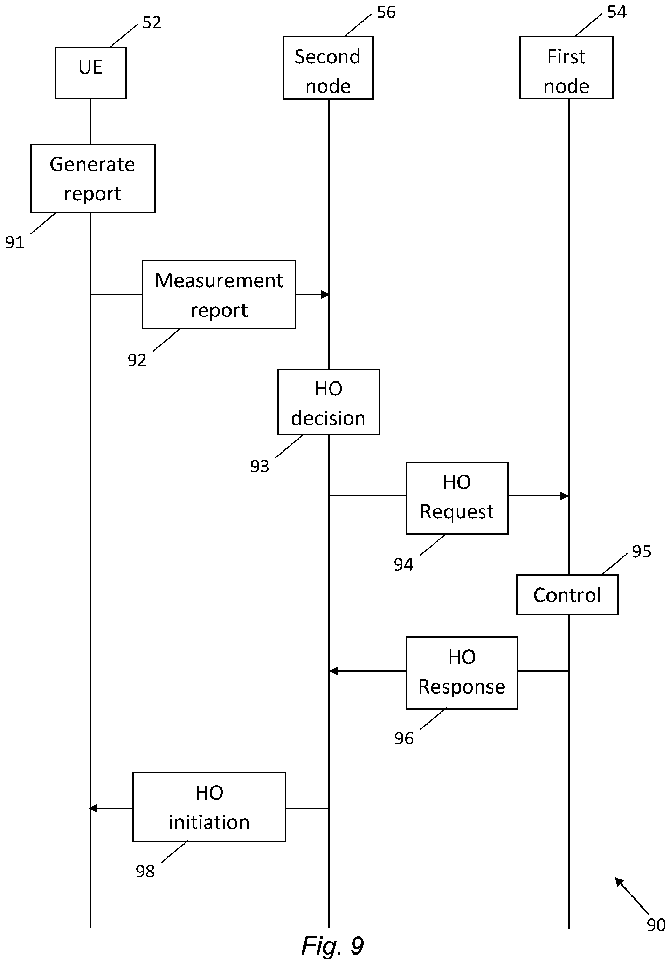

FIG. 9 shows a message flow sequence, indicated generally by the reference numeral 90, in accordance with an example embodiment. The sequence 90 shows information and messages transferred between the UE 52, the first node 54 and the second node 56 of the system 50 described above. The sequence 90 is similar to the handover preparation phase of the message flow sequence 30 described above and is similar to the sequence 60 described above. The first node 54 may be a target node and the second node 56 may be a source/serving node.

The sequence 90 starts at operation 91, where a measurement report is generated at the UE 52. The measurement report includes information relating to the first (target) node 54. As discussed above, the report may also include a flag (*tgNBmobilityFlag*) indicating whether the first (target) node 54 is mobile (*tgNBmobilityFlag = True*) or stationary (*tgNBmobilityFlag = False*).

As discussed further below, upon identifying that the first (target) node 54 is mobile, the mobility (denoted herein by $\vartheta$) of the first node 54 relative to the UE 52 may be determined. In the event that the relative mobility is above a threshold, the UE 52 may omit the first node 54 from consideration as a target node.

The measurement report generated in the operation 91 is sent by the UE 52 to the second node 56 as message 92. Note that, in some example embodiments, if *tgNBmobilityFlag = False*, (i.e. the target node 54 is deemed to be stationary), then the algorithm 30 described above may be used. Note further that if the relative mobility of the first node relative to the UE is above the relevant threshold, the measurement report 92 may not be sent (or may be sent without including data for the potential target node that has been excluded from consideration).

In response to the measurement report provided in the message 92, the second node 56 takes a handover decision 93 and, if a handover is to be initiated, sends a handover request 94 to the first node 54.

In response to the handover request 94, the first node 54 implements a control function 95 (as discussed further below). The first node 54 then sends a handover response 96 to the second node 56.

In response to the handover response 96, the second node 56 may imitate a handover (handover initiation 98). The handover process may then proceed, for example implementing the Handover Execution and Handover Completion phases of the algorithm 30 described above.

In the message sequence 90, the decision regarding whether a handover request is accepted is made by the first (target) node (in the control operation 95). It should be noted that the handover decision could be made jointly by the first (target) node and the second (source) node in a similar manner to the message sequence 60 described above.

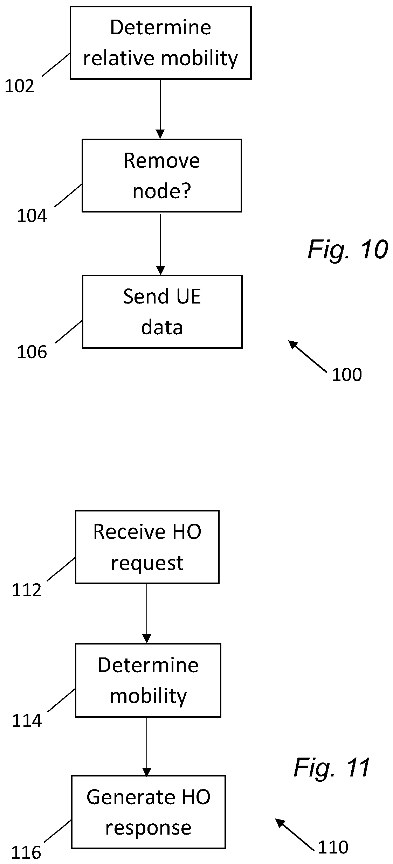

FIG. 10 is a flow chart showing algorithm, indicated generally by the reference numeral 100, in accordance with an example embodiment. The algorithm 100 is an example implementation of the measurement report generating and transmission operations 91 and 92 of the algorithm 90, as performed at the UE 52.

The algorithm 100 starts at operation 102, where upon identifying that the first (target) node 54 is mobile, the UE estimates the relative mobility $\vartheta$ (e.g relative speed) of the first node with respect to the mobile (target) node. In case the relative mobility is above the set threshold, the UE may not report this as a target cell and may, instead, look for an alternative option. Thus, as indicated in the operation 104, the first node 54 may be removed from consideration. Note that in this case, the handover request 94 discussed above may not be sent (at least until an alternative target node is identified).

In the event that the relative mobility $\vartheta$ is below the threshold, the UE 52 may compute a scaled signal strength indication for communications from the first node to the user device. The scaled signal strength indication may be dependent on a signal strength measurement (e.g. RSRP) that is adjusted by a factor dependent on a relative speed of the user device and the first node. For example, as the relative speed increases, the signal strength measurement may be reduced since the node is less attractive as a target node.

By way of example, the scaled signal strength measurement may be defined as $\text{RSRP}_{\text{Target}}(\vartheta)$ as follows:

$$\text{RSRP}_{\text{Target}}(\vartheta) = \text{RSRP}_{\text{Target}} - \alpha^{\vartheta},$$

Where:

- is the relative speed (or mobility) discussed above;
- $\alpha > 0$ (and may be a value that depends on a particular implementation (and the relevant network may initialise its value) and can be set to achieve a trade-off between HO overhead and UE-performance); and
- we use (-) considering RSRP is in dB scale.

In some example embodiments, f the difference between $\text{RSRP}_{\text{Target}}(\vartheta)$ and serving node RSRP is above an offset, the UE triggers the measurement report to initiate the HO procedure to target mobile BS, thereby implementing the operation 106 of the algorithm 100.

FIG. 11 is a flow chart showing algorithm, indicated generally by the reference numeral 110, in accordance with an example embodiment. The algorithm 110 is an example implementation of the control operation 95 performed at the first node 54. The algorithm 110 has many similarities with the algorithm 70 described above.

The algorithm 110 starts at operation 112, where a handover request (such as the HO Request 94) is received at the first node 54 from a second node (e.g. the second node 56 of the mobile communication network), wherein said handover request requests that the first node serves said user device.

At operation 114, a mobility of the first node (which may be a mobile node, as discussed above) is determined.

At operation 116, a handover request response is generated based, at least in part, on the mobility determined in the operation 114. The handover response can then be sent to the second node 56 as the HO Response 96.

The mobility of the first node may comprise a speed of the node, as discussed above with reference to the operation 74 of the algorithm 70. Thus, for example, the handover request may be dependent on whether a speed for the node (e.g. $v_{MRN}$) is above or below a threshold. Thus, as discussed above, if $v_{MRN} > v_{threshold}$, the first node 54 may reject the handover request 94 and if $v_{MRN} < v_{threshold}$, the first node 54 may accept (or conditionally accept) the handover request. Such a conditional accept may additionally provide addition information, e.g., with possible location of first node (MRN) after $\Delta t_1$ and $\Delta t_2$ time, as discussed in detail above, although this is not essential to all example embodiments.

Alternatively, or in addition, the operation 114 may determine whether said first node is temporarily stationary and, if so, setting said handover request response to reject or postpone said handover request. Thus, the "mobility" of the first node may be related to whether or not the first node is temporarily stationary (e.g. waiting at a bus stop).

Consider, for example, the MRN 42 of the system 40 described above. When the bus on which the MRN is mounted stops at a bus stop or a traffic signal, the relative mobilitybased check of the operation 102 described above will allow outboard UEs standing on the bus stop (i.e. waiting for other buses) to request a connection to the MRN. Here, the mobility check of the operation 114 can be used to reject the handover based on the determination of that the MRN is temporarily stationary.

Thus, a mobile node can reject/postpone handover requests when it knows that it is in a stationary state (e.g. for a set time window) to avoid unnecessary connections. In case the mobile node postpones a handover request, it may send an indication to the serving node to ask the UE to re-evaluate it after a specified time window.

In at least some of the embodiments described above, a relative speed is considered. For example, a relative speed between the UE 52 and the first node 54 may be used when determining whether or not to accept a handover request (or even to make a handover request). A number of options exist for estimating the relative speed between a UE and a node. These include utilizing signal strength measurements (such as RSRP); using time or arrival or other ranging signals; using Doppler frequency shift; and using direct sensing. Further details of some example embodiments are discussed further below.

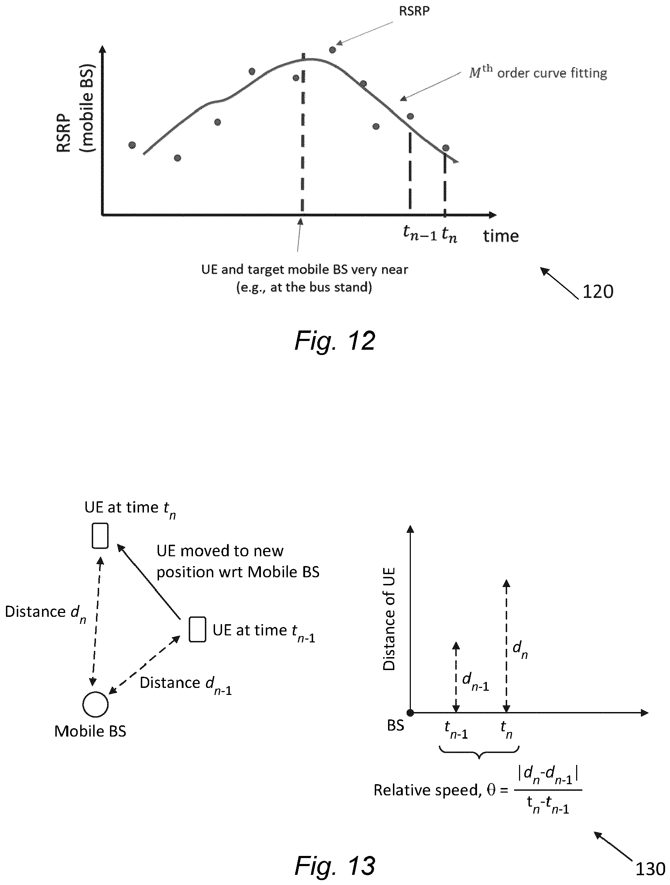

FIG. 12 is a plot, indicated generally by the reference numeral 120, showing a curve that can be used for determining the relative speed of a UE with respect to a target node that can be determined utilizing RSRP measurements in accordance with an example embodiment. For example, a UE may measure the RSRP from the target mobile. From the measured RSRP values over time, the $M^{th}$ order curve shown in the plot 120 can be fitted (e.g., using a maximum likelihood curve fitting or different machine-learning algorithms can be applied for the curve fitting).

The variation of RSRP measurement over time can be used to estimate the relative speed between a UE and a mobile node. For example, the estimated RSRP values (given by fitted curve) at time $t_{n-1}$ and $t_n$ can be used to estimate the relative change in the distance by using suitable pathloss model (e.g., Friis path loss model), and then estimate the relative speed $\vartheta$. Furthermore, the scaled RSRP measure at time $t_n$ can be calculated as: $RSRP_{Target}(\vartheta) = RSRP_{Target} - \alpha^\vartheta$, where $\alpha > 1$.

Note that parameter $\alpha$ is used to underestimate the RSRP measure for high relative speed. Network operators may decide this parameter (e.g. using a field trial test). For example, the variable $\alpha$ could be low in poor coverage areas, so RSRP will be underestimated to a lesser degree. The variable $\alpha$ can be high in good coverage areas, to fully avoid outboard UEs connection with the moving cell.

FIG. 13 is a block diagram, indicated generally by the reference numeral 130, demonstrating the determination of the relative speed of a UE with respect to a target node utilizing time-of-arrival or other ranging signals in accordance with an example embodiment. A UE may acquire information from its serving cell about the positioning reference signal (PRS) transmitted by the target mobile BS. Then UE can estimate the time of arrival (TOA) estimate from the target mobile node. With the measurement of TOAs (or, range) over the time interval, the relative speed $\vartheta$ with respect to the target mobile BS can be calculated as shown in FIG. 13.

In another implementation, a serving node can acquire the position of a target mobile node and the UE, then the serving node can calculate the range of UE from the target mobile node. The serving node can utilize this information over a period of time to calculate the relative speed $\vartheta$ of UE with respect to a target mobile node (i.e. suggested as a top cell in the UE measurement report).

In another implementation, the UE can estimate a Doppler frequency shift, from which the relative speed $\vartheta$ can be estimated.

In yet another example implementation, the relative speed of a UE with respect to a target node can be determined utilizing direct sensing.

As discussed above, there are a number of methods available for estimating the relative speed of a mobile node (for example with respect to a UE). In some example embodiments, a scaled $\text{RSRP}_{\text{Target}}(\vartheta)$ is also computed as a metric, including design parameter $\alpha$, to overcome estimation error in the relative speed (mobility), while making handover decision. As discussed above, the parameter $\alpha$ is a design parameter, with the field test the parameter can be decided in order to overcome under/over detection issue.

The sensitivity of mobility detection can be further improved by diversifying the measurements. For example, a UE may utilize a combination of above methods and check the variability (variance) of the estimated relative velocity as another metric to overcome over/under detection of mobile BS mobility. To illustrate further, UE can create measurement table as below:

Table 2: Multiple relative speed estimates

|  | RSRP based | Ranging based | Doppler based | Sensing based |
|---|---|---|---|---|
| Estimated relative speed | $\vartheta_1$ | $\vartheta_2$ | $\vartheta_3$ | $\vartheta_4$ |

A final estimate of relative speed may, for example, be an average value (e.g. $\vartheta = \frac{1}{4}\sum_{i=1}^{i=4}\vartheta_i$ ), an average value after removing the outliers, or some other combination of the multiple estimates.

**Example:**

Consider the scenario in which an outboard UE (as described above with reference to FIG. 4) is trying to connect with the MRN 42 of the system 40. Assume a relative speed $\vartheta = 0$ . Then,

$$\text{RSRP}_{\text{Target}}(\vartheta) = \text{RSRP}_{\text{Target}} - \alpha^{\vartheta} = \text{RSRP}_{\text{Target}}.$$

In this case, the scaled $\text{RSRP}_{\text{Target}}(\vartheta)$ is equal to the target RSRP $\text{RSRP}_{\text{Target}}$ for relative speed $\vartheta = 0$.

In the event that the relative speed is $19 = 10$ km/hr (2.7778 m/sec) but it is less than the threshold of relative speed (e.g. $\vartheta^{th} = 3$ m/sec), then the proposed solution scales the target moving cell RSRP with respect to relative speed as follows:

$$\text{RSRP}_{\text{Target}}(\vartheta) = \text{RSRP}_{\text{Target}} - \alpha^{2.7778}$$

In this way, the number of unnecessary handovers may be reduced, thereby tending to improve the quality of experience (QoE) of the UEs.

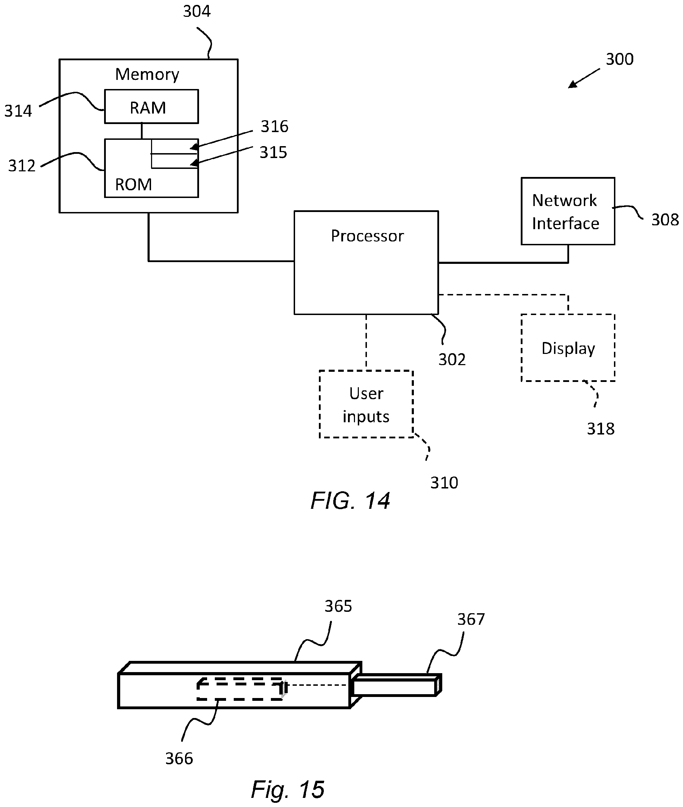

For completeness, FIG. 14 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods, algorithms and sequences 20, 30, 60, 70, 80, 90, 100 and 110 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 15 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of FIGS. 2,3 and 6 to 11 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. A first node of a mobile communication network, the first node comprising:

    means for receiving a handover request from a second node of the mobile communication network, wherein the second node is serving a user device thereby enabling the user device to communicate using the mobile communication network and wherein said handover request requests that the first node serves said user device;
    means for determining whether the first node has a speed above a first threshold level;
    means for generating a handover request response; and

means for providing the handover request response to the second node in response to the handover request, wherein:

the handover request response rejects said request in the event that the speed of the first node is above the threshold level; and

the handover request response conditionally accepts said request and includes estimated position data for the first node at one or more future time points in the event that the speed of the first node is below the threshold level.

2. A first node as claimed in claim 1, further comprising means for determining the speed of said first node.

3. A first node as claimed in claim 1 or claim 2, further comprising means for generating said estimated position data.

4. A first node as claimed in any one of claims 1 to 3, further comprising means for determining whether said first node is temporarily stationary and, if so, setting said handover request response to reject or postpone said handover request.

5. A first node as claimed in any one of the preceding claims, further comprising means for receiving data from the second node of the mobile communication network, said data including data relating to communications between a user device and the first node.

6. A second node of a mobile communication network, the node comprising:

means for receiving data from a user device that is being served by the second node thereby enabling the user device to communicate using the mobile communication network, wherein said data includes data relating to a first node of the mobile communication network;

means for sending a handover request to the first node;

means for receiving a handover request response from the first node, wherein said handover request response includes estimated position data for the first node at one or more future time points in the event that the handover request response is a conditional acceptance of the handover request; and

means for determining whether initiate a handover from the second node to the first node based, at least in part, on a position of the user device and the estimated position data for the first node.

7. A second node as claimed in claim 6, further comprising means for determining whether to send a further handover request to the first node in the event that the handover request response is a postpone instruction.

8. A first node as claimed in claim 5 or a second node as claimed in claim 6 or claim 7, wherein the received data includes a flag indicating whether said first node is a mobile node or a stationary node.

9. A first node or a second node as claimed in any one claims 5 to 8, wherein the received data further comprises a scaled signal strength indication for communications from the first node to the user device.

10. A first node or a second node as claimed in claim 9, wherein the scaled signal strength indication is dependent on a signal strength measurement that is adjusted by a factor dependent on a relative speed of the user device and the first node.

11. A user device of a mobile communication network comprising:

means for determining whether a relative speed between a first node of the mobile communication network and the user device is above a threshold and, if so, removing said first node from consideration as a target node for communications; and

means for providing data to a second node of the mobile communication network, wherein the second node is serving the user device thereby enabling the user device to communicate using the mobile communication network, wherein said data includes: data relating to communications between the user device and the mobile communication network; and data relating to said first node in the event that the determined relative speed is below said threshold.

12. A user device as claimed in claim 11, further comprising means for determining a scaled signal strength indication for communications from the first node to the user device, wherein said data relating to the first node includes said scaled signal strength indication.

**13.** A user device as claimed in claim 12, wherein the scaled signal strength indication is dependent on a signal strength measurement that is adjusted by a factor dependent on the relative speed of the user device and the first node.

**14.** A user device as claimed in any one of claims 11 to 13, further comprising means for determining said relative speed based on one or more of:

signal strength measurements;
time of arrival or other ranging signals;
Doppler shift measurement; and
direct sensing.

**15.** A method comprising:

receiving a handover request at a first node of a mobile communication network, from a second node of the mobile communication network, wherein the second node is serving a user device thereby enabling the user device to communicate using the mobile communication network and wherein said handover request requests that the first node serves said user device;
determining whether the first node has a speed above a first threshold level;
generating a handover request response; and
providing the handover request response to the second node in response to the handover request,
wherein:

the handover request response rejects said request in the event that the speed of the first node is above the threshold level; and
the handover request response conditionally accepts said request and includes estimated position data for the first node at one or more future time points in the event that the speed of the first node is below the threshold level.

wired connection for femtocell

wired connection

Core Network

wireless backhaul link

MRN

femtocell

Macro BS

MRN

fixed RN

UE

NOKIA

vehicular network

D2D

small cell

*Fig. 1*

10

Handover decision

22

Handover request

24

Handover

26

20

*Fig. 2*

Fig. 3

Onboard UEs

Outboard UEs

DBS1

DBS2

MRN

42

43

44

45

41

40

*Fig. 4*

Second Node — 56

UE

52

First Node — 54

50

*Fig. 5*

Fig. 6

Receive HO request

72

Determine speed

74

Generate HO response

76

*Fig. 7*

70

Receive UE data

82

Send HO request

84

Receive HO Response

86

*Fig. 8*

Initiate HO?

88

80

Fig. 9

Determine
relative mobility

102

Remove
node?

104

Send UE
data

106

*Fig. 10*

100

Receive HO
request

112

Determine
mobility

114

Generate HO
response

116

*Fig. 11*

110

RSRP

$M^{th}$ order curve fitting

RSRP (mobile BS)

$t_{n-1}$ $t_n$   time

UE and target mobile BS very near
(e.g., at the bus stand)

120

## Fig. 12

UE at time $t_n$

UE moved to new
position wrt Mobile BS

Distance $d_n$

UE at time $t_{n-1}$

Distance $d_{n-1}$

Mobile BS

Distance of UE

$d_n$

$d_{n-1}$

BS   $t_{n-1}$   $t_n$

Relative speed, $\theta = \dfrac{|d_n - d_{n-1}|}{t_n - t_{n-1}}$

## Fig. 13

130

*FIG. 14*

*Fig. 15*

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUALCOMM INCORPORATED: "Enhancements for IAB-node mobility", 3GPP DRAFT; R2-2207283, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. electronic; 20220815 - 20220826 9 August 2022 (2022-08-09), XP052260606, Retrieved from the Internet: URL:https://ftp.3gpp.org/tsg_ran/WG2_RL2/T SGR2_119-e/Docs/R2-2207283.zip R2-2207283 Mobility enhancements for mobile IAB.docx [retrieved on 2022-08-09] * page 1 - page 4 * ----- | 1-5,15 | INV. H04W36/00 ADD. H04W84/04 |
| A | US 2018/124656 A1 (PARK KYUNGMIN [US] ET AL) 3 May 2018 (2018-05-03) * paragraph [0179] - paragraph [0181] * * paragraph [0190] - paragraph [0192] * * paragraph [0224] - paragraph [0269] * * figure 10 * ----- -/-- | 1-5,15 | TECHNICAL FIELDS SEARCHED (IPC) H04W |

The present search report has been drawn up for all claims

| Place of search | Date of completion of the search | Examiner |
|---|---|---|
| Munich | 14 September 2023 | Aguilar Cabarrus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

**EUROPEAN SEARCH REPORT**

Application Number

EP 23 15 2038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOMI: "Scenarios for consideration in mIAB cell selection and reselection", 3GPP DRAFT; R2-2210447, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20221010 - 20221019 30 September 2022 (2022-09-30), XP052263766, Retrieved from the Internet: URL:https://ftp.3gpp.org/tsg_ran/WG2_RL2/TSGR2_119bis-e/Docs/R2-2210447.zip R2-2210447 mIAB Scenarios for UE selection and reselection.docx [retrieved on 2022-09-30] * page 1 - page 7 * | 1-5,15 | |
| X | SUDEEP PALAT ET AL: "Mobility enhancement of mobile IAB-node and served UEs", 3GPP DRAFT; R2-2211374; TYPE DISCUSSION; NR_MOBILE_IAB-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Toulouse, FR; 20221114 - 20221118 4 November 2022 (2022-11-04), XP052215483, Retrieved from the Internet: URL:https://www.3gpp.org/ftp/TSG_RAN/WG2_RL2/TSGR2_120/Docs/R2-2211374.zip R2-2211374 Mobility mIAB-v1.docx [retrieved on 2022-11-04] | 11,14 | TECHNICAL FIELDS SEARCHED (IPC) |
| Y | * page 1 - page 10 * | 12,13 | |

-/--

~~The present search report has been drawn up for all claims~~

| Place of search | Date of completion of the search | Examiner |
|---|---|---|
| Munich | 14 September 2023 | Aguilar Cabarrus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 15 2038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INTEL CORPORATION: "Mobility Enhancement of mobile IAB-node and served UEs", 3GPP DRAFT; R2-2209640, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic meeting; 20221010 - 20221019 30 September 2022 (2022-09-30), XP052262969, Retrieved from the Internet: URL:https://ftp.3gpp.org/tsg_ran/WG2_RL2/TSGR2_119bis-e/Docs/R2-2209640.zip R2-2209640_Mobility mIAB-v1.docx [retrieved on 2022-09-30] | 11,14 | |
| Y | * page 1 - page 9 * | 12,13 | |
| X | INTEL CORPORATION: "Mobility Enhancement of mobile IAB-node and served UEs", 3GPP DRAFT; R2-2207121, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic meeting; 20220817 - 20220826 9 August 2022 (2022-08-09), XP052260444, Retrieved from the Internet: URL:https://ftp.3gpp.org/tsg_ran/WG2_RL2/TSGR2_119-e/Docs/R2-2207121.zip R2-2207121 Mobility mIAB-v1.docx [retrieved on 2022-08-09] | 11,14 | TECHNICAL FIELDS SEARCHED (IPC) |
| Y | * page 1 - page 10 * | 12,13 | |

-/--

The present search report has been drawn up for all claims

| Place of search | Date of completion of the search | Examiner |
|---|---|---|
| Munich | 14 September 2023 | Aguilar Cabarrus, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EUROPEAN SEARCH REPORT**

Application Number

EP 23 15 2038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ERICSSON: "Mobility enhancements for mIAB node", 3GPP DRAFT; R2-2208103, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic meeting; 20220817 10 August 2022 (2022-08-10), XP052261416, Retrieved from the Internet: URL:https://ftp.3gpp.org/tsg_ran/WG2_RL2/TSGR2_119-e/Docs/R2-2208103.zip R2-2208103 Mobility.docx [retrieved on 2022-08-10] * page 1 – page 5 * ----- | 12,13 | |

**TECHNICAL FIELDS SEARCHED (IPC)**

The present search report has been drawn up for all claims

| Place of search | Date of completion of the search | Examiner |
|---|---|---|
| Munich | 14 September 2023 | Aguilar Cabarrus, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

11-14

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-5, 15

    Invention I is directed to a first node and a method performed by the first node of a mobile communication network comprising:receiving a handover request at a first node of a mobile communication network, from a second node of the mobile communication network, wherein the second node is serving a user device thereby enabling the user device to communicate using the mobile communication network and wherein said handover request requests that the first node serves said user device;determining whether the first node has a speed above a first threshold level;generating a handover request response; andproviding the handover request response to the second node in response to the handover request,wherein:the handover request response rejects said request in the event that the speed of the first node is above the threshold level; andthe handover request response conditionally accepts said request and includes estimated position data for the first node at one or more future time points in the event that the speed of the first node is below the threshold level.

    ---

2. claims: 6-10

    Invention II is directed to a second node of a mobile communication network, the node comprising:means for receiving data from a user device that is being served by the second node thereby enabling the user device to communicate using the mobile communication network, wherein said data includes data relating to a first node of the mobile communication network;means for sending a handover request to the first node;means for receiving a handover request response from the first node, wherein said handover request response includes estimated position data for the first node at one or more future time points in the event that the handover request response is a conditional acceptance of the handover request; andmeans for determining whether initiate a handover from the second node to the first node based, at least in part, on a position of the user device and the estimated position data for the first node.

    ---

3. claims: 11-14

    Invention III is directed to a user device of a mobile communication network comprising:means for determining whether a relative speed between a first node of the mobile communication network and the user device is above a threshold and, if so, removing said first node from

Europäisches
Patentamt

European
Patent Office

Office européen
des brevets

**LACK OF UNITY OF INVENTION
SHEET B**

Application Number

EP 23 15 2038

The Search Division considers that the present European patent application does not comply with the requirements of unity of invention and relates to several inventions or groups of inventions, namely:

```
consideration as a target node for communications; andmeans
for providing data to a second node of the mobile
communication network, wherein the second node is serving
the user device thereby enabling the user device to
communicate using the mobile communication network, wherein
said data includes: data relating to communications between
the user device and the mobile communication network; and
data relating to said first node in the event that the
determined relative speed is below said threshold.
                            ---
```

## ANNEX TO THE EUROPEAN SEARCH REPORT
## ON EUROPEAN PATENT APPLICATION NO.

EP 23 15 2038

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2023

| Patent document cited in search report | | Publication date | Patent family member(s) | | Publication date |
|---|---|---|---|---|---|
| US 2018124656 | A1 | 03-05-2018 | US | 2018124656 A1 | 03-05-2018 |
| | | | US | 2019380069 A1 | 12-12-2019 |
| | | | US | 2021058832 A1 | 25-02-2021 |

EPO FORM P0459